# EUROPEAN PATENT SPECIFICATION

(11) **EP 2 212 159 B1**
(45) Date of publication and mention of the grant of the patent: **07.01.2015**
(21) Application number: 08848737.6
(22) Date of filing: 10.11.2008
(51) Int. Cl.: B60R 19/34

(54) **A CRASH BOX AND THE ATTACHMENT OF A CRASH BOX TO A SIDE RAIL OF A VEHICLE**
CRASHBOX UND MONTAGE EINER CRASHBOX AM LÄNGSTRÄGER EINES FAHRZEUGES
AMORTISSEUR DE CHOCS ET FIXATION D'UN AMORTISSEUR DE CHOCS SUR UN LONGERON LATÉRAL DE VÉHICULE

(30) Priority: 12.11.2007 SE 0702475
(43) Date of publication of application: 04.08.2010
(73) Proprietor: Gestamp HardTech AB, 971 25 Luleå (SE)
(72) Inventor: TANSKANEN, Michael, S-945 34 Rosvik (SE)
(74) Representative: Körber, Martin Hans
(86) International application number: PCT/SE2008/000635
(87) International publication number: WO 2009/064235

(56) References cited:
- WO-A1-99/59842
- WO-A2-2007/121896
- DE-A1- 10 317 226
- JP-A- 6 099 781
- US-A- 4 465 312
- US-A1- 2006 125 254
- US-A1- 2006 244 274

## Description

### Field of the invention

This invention relates to a combination of a crash box and a rail of a vehicle, the crash box with a closed profile and designed to be attached to the side rail of a vehicle by being inserted into the side rail and fastened by means of through bolts.

### Background of the invention

US 4,465,312 discloses a crash box 10 with a C-shaped profile 20 in its cross section, designed to be attached to a side rail 12 of a vehicle by being inserted into to the side rail fastened by means of through bolts 102,bb. The crash box is inserted into the side rail with a vertical fit relative to the side rail, wherein the inserted part of the crash box takes up at most half the width of the side rail in the region of bolt 102, is horizontally narrow relative to the rest of the crash box and has an essential C-shaped section with a mounting hole 80 on its narrow horizontal sides.

In an attachment of this kind, use is made of a stiffener in the form of a sleeve around the bolts so that the side rail and crash box are not deformed when the bolts are tightened. The aim of the invention is to simplify the crash box and the mounting thereof. Attachment of this kind is obtained when the inserted portion of the crash box takes up at most half the width of the side rail. The crash box is designed in such a manner that the portion intended to be inserted into the side rail is tapered and has an essentially rectangular section with mounting holes on its narrow sides. The invention is defined by the claims.

### Brief description of the drawings

**Figure 1** is a perspective view of an upper member of a three-part crash box according to the invention shown as one embodiment of the invention.
**Figure 2** is a perspective view of a lower member of the crash box.
**Figure 3** is a perspective view of a third member of the crash box.
**Figure 4** is a perspective view of the crash box according to Figures 1 - 3 assembled and attached to a bumper beam.
**Figure 5** shows the crash box according to Figure 4, without the bumper beam, attached to a side rail of a vehicle.

### Detailed description of the preferred embodiment shown

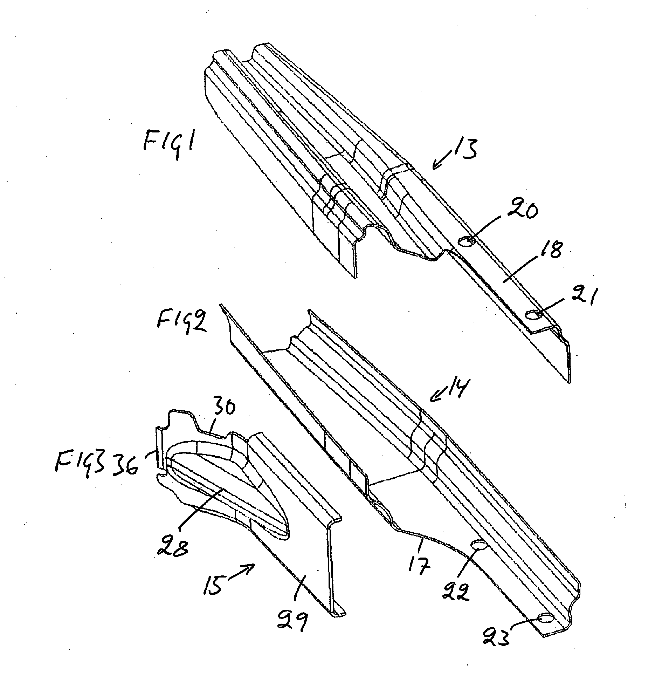

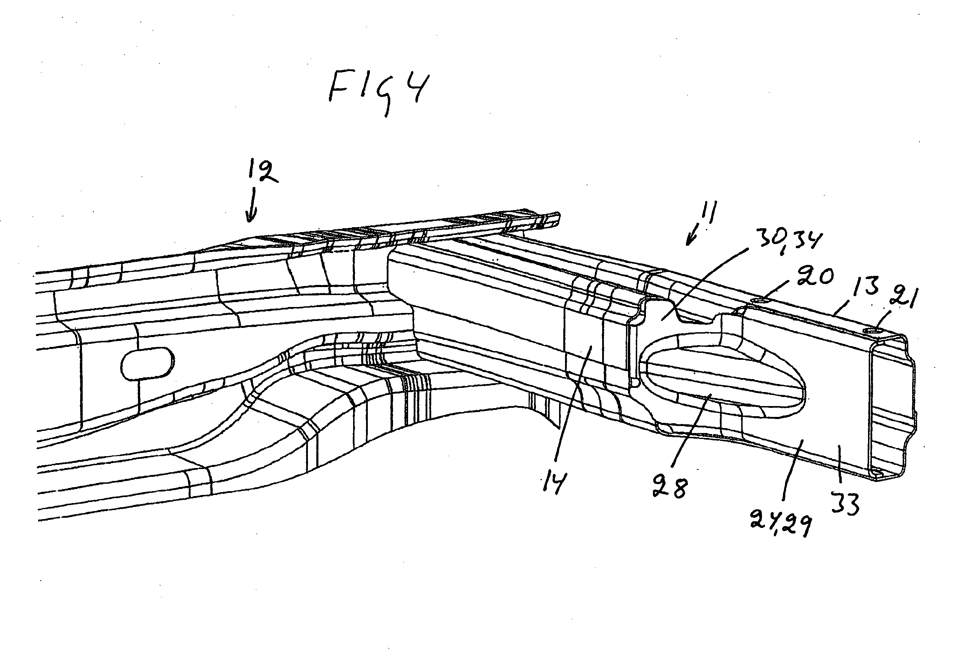

Figure 4 shows a crash box 11 the outer end of which is adapted to the profile of a bumper beam 12 and is attached thereto, advantageously welded to the bumper member. The crash box 11 consists of three members, as shown in Figures 1 - 3, an upper member 13, a lower member 14 and a third member 15. These three members are made of sheet metal, advantageously by cold-forming high-strength sheet steel. The upper member and the lower member are welded together to form a closed profile. However, their attachment ends are provided with recesses 17 so that one of the members, the upper member, has only a narrow flat upper side 18 at its attachment end, while the other member, the lower member, has a narrow flat underside. These sides have bolt holes 20-23. The third member has a straight portion 29 and a curved portion 30 and covers the recesses 16, 17 and is welded to the upper member and the lower member. The vertical straight portion 29 has bent edges 31, 32.

The attachment end 24 of the crash box (Fig. 4) thus has a closed rectangular profile which has a tall, but narrow portion 18 with bolt holes 20-23 on the narrow horizontal sides for through bolts and a transition portion 34 which, via a soft curve, becomes wider and is adapted to the width of the side rail.

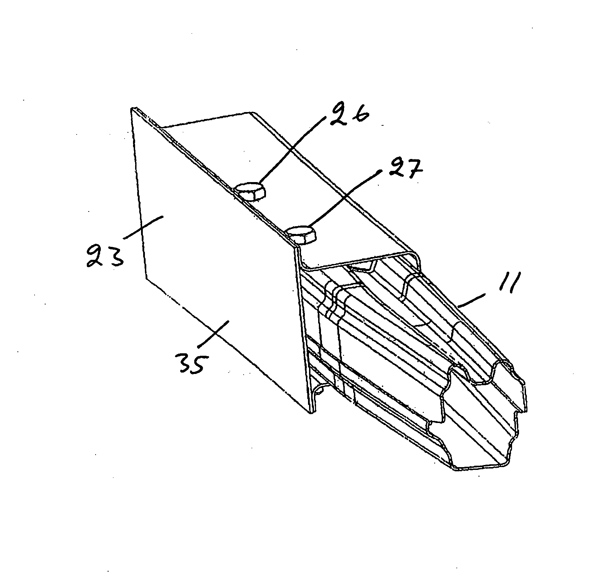

Figure 5 shows the outer end of a side rail 23 of a vehicle. The side rail shown is a conventional one with a closed rectangular profile. The end 24 of the crash box is inserted into the side rail. The bumper beam is not shown in this figure. The side rail has bolt holes 26 which match the bolt holes 20-23 of the crash box and are located close to one vertical side 35 of the side rail. The crash box is fastened to the side rail by means of through bolts (bolts and nuts). A bolt 27 is shown in one of the bolt holes 26. The bolts are located close to one side of the side rail. One of the vertical sides 35 of the side rail is thus situated at one side of the bolts and close to the bolts and the vertical side 29 of the crash box is situated at the other side of the bolts and close to the bolts. The bolts can be fastened tightly and the joint is strong because the crash box has a vertical fit relative to the side rail, and because the crash box is narrow and has the flat end portion 29 of the third member 15 which forms a vertical side of the crash box in the region of the bolts and up to the bolts. The inserted portion 24 of the crash box takes up at most half the width of the side rail in the region of the bolts 27.

The third member 15 of the crash box may have a stiffener 28 which increases the bending resistance horizontally. This stiffener is designed as a reinforcing bulge which extends from the flat vertical portion 29 of the third crash box member and essentially to its outer end 36, which is located inside, but close to the end of the side rail.

The bumper beam 12 is produced complete with welded-on crash boxes and these are inserted into side rails of the vehicle and fastened by bolts. The mounting of the bumper member is thus very simple.

## Claims

1. Combination of a crash box and a side rail of a vehicle, the crash box (11) with a closed profile in its cross section and designed to be attached to the side rail (23) of a vehicle by being inserted into the side rail fastened by means of through bolts (27),
wherein the crash box is inserted into the side rail with a vertical fit relative to the side rail,
whereby the inserted part (24) of the crash box takes up at most half the width of the side rail in the region (18, 19, 29) of the bolts (27), is horizontally narrow relative to the rest of the crash box and has an essentially rectangular section with mounting holes (20-23) on its narrow horizontal sides (18),
wherein the crash box (11) consists of two longitudinal open crash box members (13, 14) which are fastened together and form a closed section, but
have an open section on the narrow portion (24) designed to be inserted into the side rail (23), and a third curved crash box member (15) which is fastened to the other two members and covers the open portions thereof and forms one (29) of two broad vertical sides of a rectangular section.

2. Combination according to claim 1, wherein the third crash box member (15) has a straight portion (29) with bent edges and a curved portion (30) adapted to the greater width of the two longitudinal crash box members (13, 14) on the portion of the crash box intended to be outside the side rail.

3. Combination according to claim 2, wherein a reinforcing bulge (28) extends from the flat portion (29) of the third crash box member and essentially to the end (36) of the crash box member.

## Patentansprüche

1. Kombination einer Crashbox und eines Seitenträgers eines Fahrzeugs, wobei die Crashbox (11) mit einem geschlossenen Profil in ihrem Querschnitt und bestimmt ist, an dem Seitenträger (23) eines Fahrzeugs durch Einführen in den Seitenträger und Befestigung mittels Durchgangsbolzen (27) angebracht zu werden,
wobei die Crashbox in den Seitenträger mit einer vertikalen Passung in Bezug auf den Seitenträger eingeführt ist,
wodurch das eingeführte Teil (24) der Crashbox, das bestenfalls die Hälfte der Breite des Seitenträgers in dem Bereich (18, 19, 29) der Bolzen (27) einnimmt, relativ nahe am Rest der Crashbox ist und einen im wesentlichen rechteckigen Querschnitt mit Befestigungslöchern (20-23) auf dessen engen Seiten (18) hat, wobei die Crashbox (11) aus zwei länglichen offenen Crashbox-Teilen (13, 14) besteht, welche miteinander befestigt sind und einen geschlossenen Abschnitt bilden, jedoch einen offenen Abschnitt auf dem engen Teil (24) haben, der bestimmt ist, in den Seitenträger (23) eingeführt zu werden, und einem dritten gekrümmten Crashbox-Teil (15), welches an den anderen beiden Teilen befestigt ist und deren offenen Teile bedeckt und eine (29) von zwei breiten vertikalen Seiten eines rechteckigen Abschnitts bildet.

2. Kombination nach Anspruch 1, wobei das dritte Crashbox-Teil (15) einen geraden Bereich (29) mit gebogenen Rändern und einen gekrümmten Bereich (30) hat, der die größere Breite der beiden länglichen Crashbox-Teile (13,14) auf dem Bereich der Crashbox angepasst ist, der den Zweck hat, außerhalb des Seitenträgers zu sein.

3. Kombination nach Anspruch 2, wobei eine Verstärkungswulst (28) sich vom flachen Bereich (29) des dritten Crashbox-Teils und im Wesentlichen zum Ende (36) des Crashbox-Teils erstreckt.

## Revendications

1. Combinaison d'un amortisseur de chocs et d'un longeron latéral d'un véhicule, l'amortisseur de chocs (11) avec un profil fermé dans sa section transversale et conçu pour être fixé au longeron latéral (23) d'un véhicule en étant inséré dans le longeron latéral fixé au moyen de boulons traversants (27),
où l'amortisseur de chocs est inséré dans le longeron latéral avec un ajustement vertical relativement au longeron latéral,
où la partie insérée (24) de l'amortisseur de chocs occupe au maximum la moitié de la largueur du longeron latéral dans la région (18, 19, 29) des boulons (27), est horizontalement étroite relativement au reste de l'amortisseur de chocs et possède une section essentiellement rectangulaire avec des trous de montage (20-23) sur ses côtés horizontaux étroits (18), où l'amortisseur de chocs (11) consiste en deux éléments d'amortisseur de chocs longitudinaux ouverts (13, 14) qui sont fixés ensemble et forment une section fermée, mais possèdent une section ouverte sur la portion étroite (24) conçue pour être insérée dans le longeron latéral (23), et un troisième élément d'amortisseur de chocs courbé (15) qui est fixé aux deux autres éléments et couvre les portions ouvertes de ceux-ci et forme un (29) de deux côtés verticaux larges d'une section rectangulaire.

2. Combinaison selon la revendication 1, dans laquelle le troisième élément d'amortisseur de chocs (15) possède une portion droite (29) avec des bords courbés et une portion courbée (30) adaptée à la largueur plus grande des deux éléments d'amortisseur de chocs longitudinaux (13, 14) sur la portion de l'amortisseur de chocs destinée à se situer à l'extérieur du longeron latéral.

3. Combinaison selon la revendication 2, dans laquelle un bourrelet de renforcement (28) s'étend de la portion plate (29) du troisième élément d'amortisseur de chocs et essentiellement à l'extrémité (36) de l'élément de l'amortisseur de chocs.
